# EUROPEAN PATENT SPECIFICATION

(11) **EP 1 592 548 B1**
(45) Date of publication and mention of the grant of the patent: **22.08.2007**
(21) Application number: 04705577.7
(22) Date of filing: 27.01.2004
(51) Int. Cl.: B31F 1/00, B31F 7/00

(54) **AIRBAG FOLDING METHOD**
AIRBAGFALTVERFAHREN
PROCEDE DE PLIAGE D'AIRBAG

(30) Priority: 27.01.2003 US 352275
(43) Date of publication of application: 09.11.2005
(73) Proprietor: TK Holdings, Inc., Auburn Hills, MI 48326 (US)
(72) Inventor: CARD, Gary, A., Clinton Twp., MI 48038 (US); PEREZ, Jaime, F., Lake Orion, MI 48362 (US)
(74) Representative: Smith, Samuel Leonard
(86) International application number: PCT/US2004/002085
(87) International publication number: WO 2004/067325

(56) References cited:
- EP-A- 0 968 887
- US-A- 4 286 954
- US-A- 5 694 737
- US-A- 5 823 567
- US-A- 5 906 395

## Description

### TECHNICAL FIELD

The present invention relates generally to inflatable restraint devices for motor vehicles, and more particularly to a method of folding such a device.

### BACKGROUND OF THE INVENTION

In recent years, engineering efforts in automobile safety systems have increasingly focused on inflatable restraint devices and methods/systems for their deployment. Of particular interest to designers are methods of folding the inflatable device or airbag to optimize the manner in which it deploys. Designs differ among the different types of airbags, for example, driver side, passenger side and side-impact airbags offer varying optimal deployment characteristics. Moreover, different vehicle structures as well as size and type of inflatable restraint apparatuses all provide different, sometimes competing considerations when developing airbag fold designs. For example, children or other relatively small occupants may have different requirements than larger occupants when it comes to optimizing vehicle safety systems. Complicating matters further, occupants may be out of a normal riding position during airbag deployment. There are thus continuing challenges to engineering broadly applicable systems that will operate effectively in view of the broad range of vehicle and occupant characteristics.

US 5,694,737 describes a method and apparatus for packing an inflatable air bag cushion into a housing of an air bag module assembly of an occupant restraint system for a motor vehicle. After securing an inlet chute of the air bag cushion in the open end of the housing and placing the air bag on a flat support with a larger portion of the back wall thereof overlaying a small portion of the back wall with the front wall in between in a folded condition, a central portion of the air bag is clamped by a large blade and subsequently a first edge portion is folded over the central portion and a second opposite edge portion is folded over the first edge portion so that opposite edge fold lines extend outwardly just inside opposite ends of the housing. A rolling clamp is attached transversely across the folded air bag and the air bag is rolled-up on an axis moved toward the housing. An inverted channel element is placed over the rolled-up air bag from above and moves the air bag to a position at the open end of the housing. An outer wall of the channel element which in any upwardly retracted position causes the rolled-up bag to be inserted into the housing and a trailing end portion of the air bag is tucked into place in the housing with a tuck blade after the outer wall of the channel element is withdrawn upwardly.

US 5,823,567 describes an apparatus and method for making an inflatable protective device made of lightweight material that can withstand the initial stress from inflation and enhance radial inflation. The device includes a cushion and an inflator port. Several stacks of folded cushion material are provided including a combination of full-width stacks and half-width stacks: a first full-width stack defined by one or more fan folds in a first lateral half of the cushion wherein the folds are substantially centred above a first centre line and are substantially over the inflator port; a second full-width stack defined by one or more fan folds in a second lateral half of the cushion wherein the folds are substantially centred above the first centre line and substantially over the inflator port in the first full-width stack; a first half-width stack defined by a plurality of fan folds in the bottom of the cushion where neither edge of each fold extends substantially over the second centre line; and a second half-width stack defined by a plurality of fan folds in the top of the cushion wherein neither edge of each fold extends substantially over the second centre line.

EP 0 968 887 describes a bag-like airbag folded into a substantially T-shape having a first developing portion which is continuous with an opening from which gas flows in and second developing portions extending fore-and-aft direction from an upper end of the first developing portion. Each of the second developing portions is folded into a bellows toward a prescribed point, thereby forming an aggregate. The aggregate is rotated, the first developing portion is wound around the aggregate, and the folded airbag is accommodated in an airbag accommodation portion of a retainer.

US 5,906,395 describes an air bag folded in such a manner that a first fold-portion of the air bag is folded along a first fold-line approximately parallel to an expanding direction, and then, a second fold-portion thereof is folded along a second fold-line approximately perpendicular to the expanding direction. Accordingly, when the air bag expands, the second fold-portion is stretched out prior to the first fold-portion. As a result, the air bag can expand promptly to securely protect a passenger.

US 4,286,954 describes a method of folding an inflatable restraint cushion for storage in a support housing which is mountable to the lower portion of the instrument panel of a vehicle. The method involves forming pleats in the cushion in a manner that, during initial deployment, the cushion mass acting on an occupant located in the proximity of the instrument panel is reduced.

### SUMMARY OF THE INVENTION

According to the present invention, there is provided a method of folding an airbag comprising: tucking a part of a distal portion of an unfolded airbag into an interior of the airbag such that the distal portion is invaginated in the interior of the airbag forming a plurality of overlapping longitudinal folds in first and second halves of the airbag; folding a proximal portion of the airbag a plurality of times along fold lines substantially transverse to an orientation of the longitudinal folds, thereby forming a first fold body; folding the distal portion of the airbag a plurality of times along fold lines substantially transverse to an orientation of the longitudinal folds, thereby forming a second fold body.

### BRIEF DESCRIPTION OF THE DRAWINGS

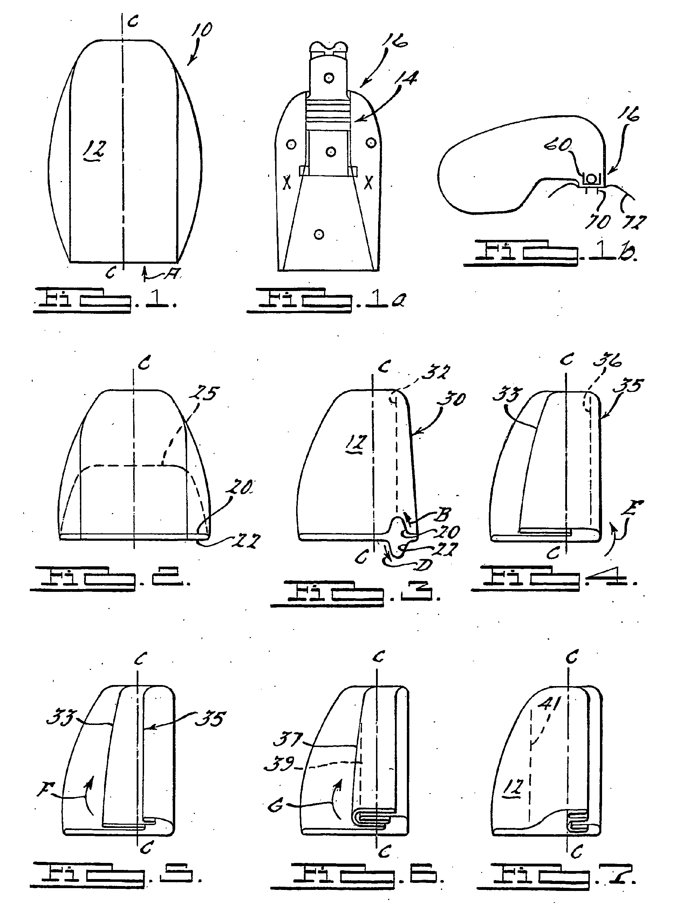

Figure 1 is a top perspective view of an airbag device in an unfolded condition;
Figure 1-a is a bottom perspective view of an airbag device in an unfolded condition;
Figure 1-b is a side perspective view of an airbag device in an unfolded condition;
Figures 2-9 are perspective views of an airbag similar to Figure 1, illustrating sequential steps in a folding method according to the present invention;
Figure 10 is a side view of the folded airbag of Figure 9;
Figures 11-16 are side views of an airbag similar to Figure 10, illustrating sequential steps in a folding method according to the present invention;
Figure 17 is a side view of an airbag folded according to a preferred embodiment of the present invention;
Figure 18 is an airbag folded according to a preferred embodiment of the present invention and an airbag housing for insertion of the folded airbag therein;
Figure 19 is a partial side view of a vehicle wherein an airbag folded according to the present invention is positioned in the vehicle instrument panel;
Figure 20 is a partial side view of an airbag similar to Figure 19, illustrating the airbag in a partially deployed state;
Figure 21 is a partial side view similar to Figure 20, illustrating the folded airbag in a partially deployed state.

### DETAILED DESCRIPTION OF PREFERRED EMBODIMENTS

Referring to Figure 1, there is shown a perspective view of an airbag 10 having a top surface 12. "C" represents the longitudinal centerline of airbag 10. The presently disclosed airbag folding method is applicable to airbags of any known design, and may be utilized with airbags positioned at various points in the automobile, for instance, top-mounts, mid-mounts, and lower-mounts, as well as in side-impact and driver-side systems. However, the method is preferably utilized in top-mounted passenger-side designs, using an elongate airbag such as the illustrated airbag 10 having an inflation opening or throat 14 disposed proximate a first end 16. Illustrative bottom and side views, respectively, of airbag 10 are shown in Figures 1-a and 1-b. In the illustrative airbag described herein, throat 14 opens in a bottom surface 18 of the airbag. Those skilled in the art will appreciate that square, round, and other airbags may be folded according to the present invention. In a preferred embodiment, the airbag 10 is attached by any known means to an inflator housing 80 (see Figure 18) near the throat 14. Inflator housing 80 is preferably secured adjacent the throat 14 by inserting a plurality of pegs 70 (see Figure 10) through matching holes in the airbag (not shown). It should be appreciated that the various illustrations referred to herein are merely illustrative of the airbag folding method, as well as the airbag and inflatable restraint system components preferred in the practice of the present invention. Therefore, the various dimensions, proportions and materials illustrated should not be taken to limit the manner in which the invention may be practiced.

In general, the presently disclosed folding method comprises tucking an end region of the airbag into an interior, followed by forming a plurality of folds in a longitudinal direction. As used herein, the term longitudinal refers to the direction running substantially along a long axis of the airbag, from an end region toward the airbag throat. After forming the longitudinal folds, the airbag is folded into two fold bodies, which are covered with a protective wrapping, and the airbag placed into a container, which is mounted in the vehicle instrument panel. The method is preferably begun by initially laying the subject airbag substantially flat on a work surface such as a table. The various folding steps disclosed herein may be facilitated by substantially flattening each fold (and therefore the entire airbag) once made, however, the process can be carried out without flattening the airbag if desired. Once airbag 10 is laid flat on the work surface, a portion of airbag 10 substantially opposite the throat, a distal portion 11 (see Figs. 10-20, discussed below) is tucked inwardly, i.e. invaginated, and the bag flattened once again. Arrow "A" in Figure 1 indicates the preferred direction of a first initial tuck fold.

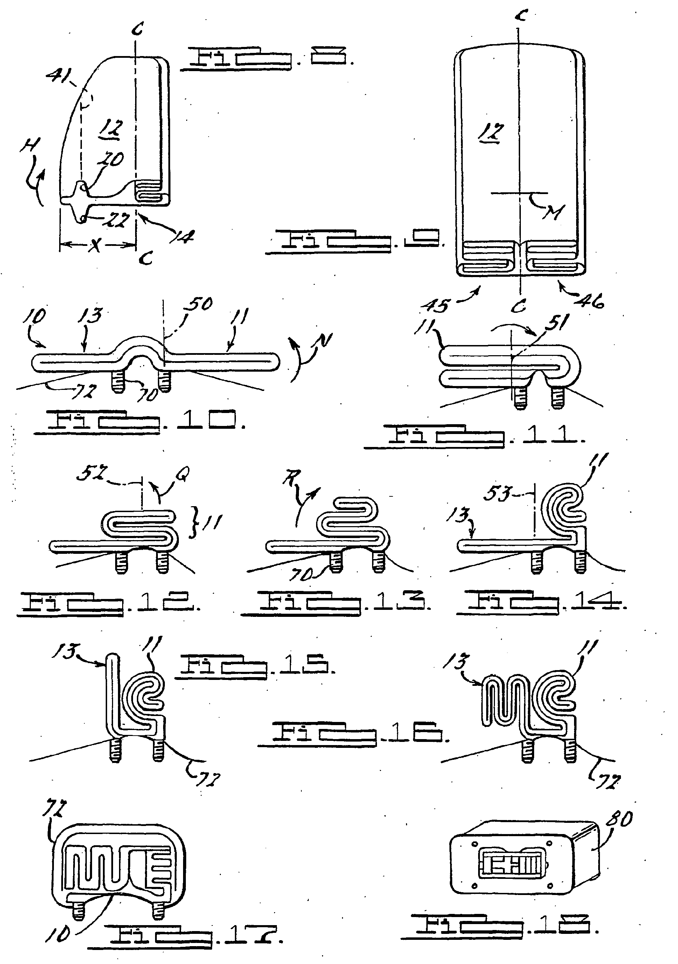

As illustrated in Figure 2, the step of tucking a part of the distal portion 11 toward the interior renders an upper lip 20 and a lower lip 22 bounding the tucked region. In Figure 2, the interior boundary of the tucked end region is represented by dashed line 25. A variety of means may be employed whereby the tucked region is formed having the desired dimensions, however, the tucking step preferably takes place by manual manipulation, and there is a relatively large tolerance in the acceptable depth of the tucked region. The tucked region is preferably between about ¼ and about ½, and most preferably about 1/3, the unfolded length of the airbag. To facilitate retention of the airbag in its various transitional folded states according to the present invention, a clip, clamp or other releasable fastener can be used to secure airbag 10 to the work surface, preferably at approximately centerline "C."

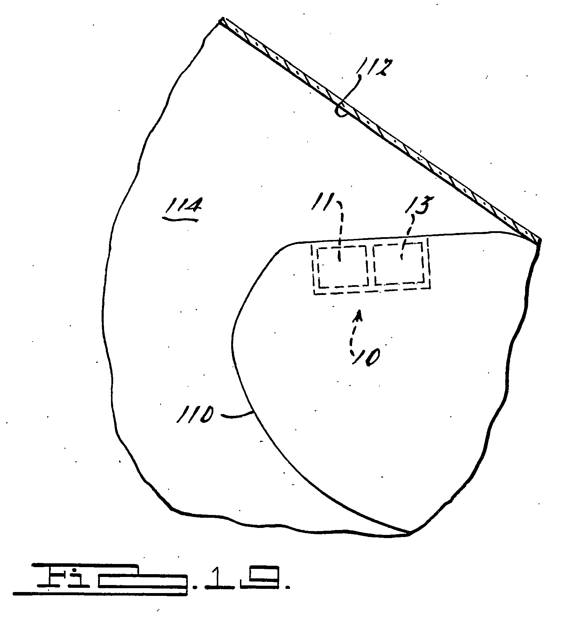

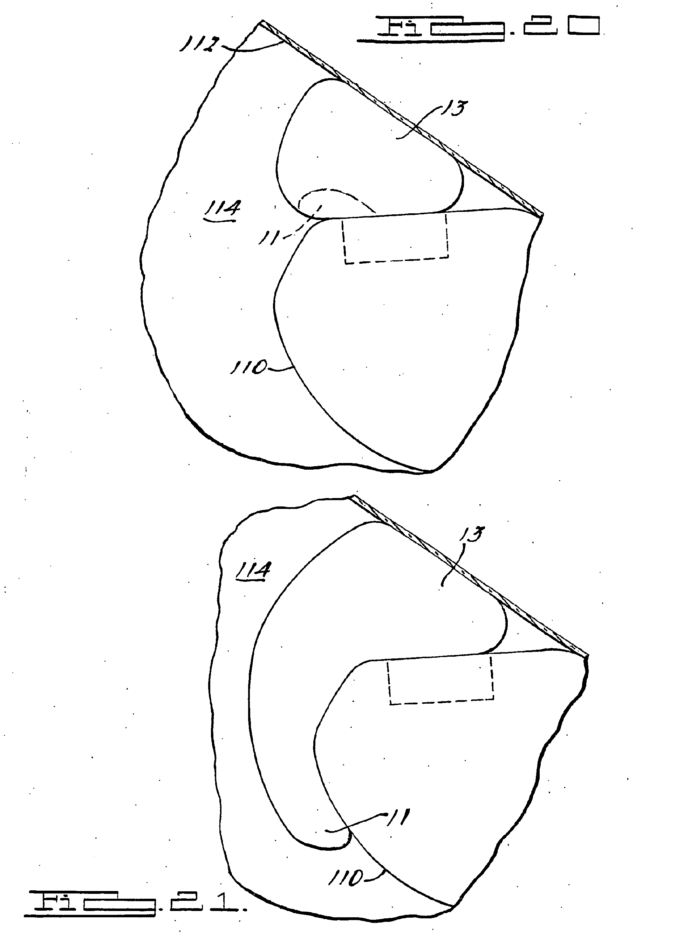

After the initial tucking step, a plurality of longitudinal folds are formed in left and right halves of airbag 10, "left" and "right" being defined relative to centerline C. Turning to Figure 3, there is shown the next step according to a preferred method of folding airbag 10 wherein upper and lower lips/edges 20 and 22 are spread apart manually at a first point preferably substantially medial to centerline C and a longitudinal edge or periphery 30 of airbag 10. It should be appreciated that the folds disclosed herein have a tolerance that generally ranges from 10 millimeters to 15 millimeters, although the present method should not thereby be limited. It has been found that when the folds are made within this general range, the airbag can be most easily fitted into a conventional airbag module housing. As lips 20 and 22 are spread apart, an upper surface/region 12 and lower surface/region 14 (not shown in Figure 3) are preferably folded and simultaneously drawn apart substantially along a line represented in Figure 3 by dashed line 32. Upper and lower surfaces/regions 12 and 14 are preferably drawn apart in substantially opposed directions represented by arrows "B" and "D" in Figure 3, respectively. Upper surface/region 12 is preferably folded along line 32, and drawn inwardly across centerline C. As used herein, the term "inwardly" refers to a direction toward the vehicle centerline relative to the longitudinal edges of the airbag, while "outwardly" refers to a substantially opposite direction, i.e. toward the centerline. Thus, a first portion of airbag 12 is folded across centerline C to render the folded body illustrated in Figure 4, having a first right inner fold edge 33. By drawing apart the upper 12 and lower 14 regions, first right inner fold edge 33 "originates" at a point in upper region 12 that is substantially medial to centerline C and an outer edge, or periphery 30 of airbag 10, relative to the airbag as pictured in Figure 3. Substantially simultaneous with this folding step, lower lip 22 is preferably longitudinally folded along a line along lower region 14 (not shown in Figure 4) that corresponds to line 32 in upper surface 12, thereby creating a first right outer fold edge 35. In a manner similar to the first right inner fold edge 33, first right outer fold edge 35 originates (relative to the airbag as pictured in Fig. 3) substantially medial to centerline C and the airbag periphery 30, in lower region 14. Subsequently, a second portion of airbag 10 is then folded inwardly along a fold line represented in Figure 4 by dashed line 36. Arrow "E" represents the approximate direction of folding in Figure 4.

Referring now to Figure 5, the aforementioned inward folding of the second portion of airbag 10 (arrow E in Figure 4) brings first right outer fold edge 35 inwardly, and substantially aligns edge 35 along centerline C. Subsequently, the first right inner fold edge 33 is folded outwardly, across centerline C, the approximate folding direction represented by arrow "F," and the positioning of the fold represented by dashed line. This folding step creates a second right inner fold edge 37. In a preferred embodiment, a further step of folding second right inner fold edge 37 outwardly across centerline C is undertaken, the fold line represented by dashed line 39, and the direction of folding approximately shown by arrow "G." The result is the folded body illustrated in Figure 7, wherein upper surface 12 is substantially continuous (not folded) across the folded airbag body. The aforementioned steps thus yield an airbag with one half of the airbag body relatively compactly folded with a plurality of longitudinal folds. During or between each of the various folding steps, releasable fasteners such as clips or clamps may be used to temporarily hold the airbag in the desired position, and removed when no longer necessary.

Once a first half of the airbag is folded as described, a second half of the airbag is preferably folded in a substantially identical fashion. As illustrated in Figures 7 and 8, the second half of the airbag is manipulated in a fashion similar to that described with respect to the first half. Upper and lower lips 20 and 22, respectively, and ultimately surfaces/regions 12 and 14, are separated, and top surface 12 and bottom surface 14 folded along the line represented by dashed line 41. In Figure 8, arrow "H" represents the approximate direction of folding. Similar to the aforementioned steps undertaken relative to the right half of airbag 10, the various folding steps for the left half result in first and second left inner fold edges (not shown), and a first left outer fold edge (not shown). By following similar, mirror image steps to those recited with respect to the first half of airbag 10, the folded body of Figure 9 is produced. In particular, the left half of airbag 10 (zone X in Figure 8) is folded a plurality of times in an overlapping fashion, rendering the folded body of Figure 9, which has a continuous (unfolded) top surface 12, and two substantially aligned longitudinal fold bodies 45 and 46, that are folded in substantially mirror image fashion.

Upon folding the subject airbag into the folded body illustrated in Figure 9, the airbag is folded a plurality of times along fold lines oriented substantially perpendicular to the direction of the longitudinal folds. Referring now to Figure 10, there is shown a side view of airbag 10, as folded and illustrated in top view in Figure 9. As shown in Figure 10, airbag 10 has a distal portion 11 and a proximal portion 13. Figure 10 also shows mounting pegs 70 of an airbag retainer (not shown), extending from the underside of airbag 10, and a flexible airbag wrap 72. Distal portion 11 is preferably folded at a fold line represented by dashed line 50, in a direction substantially transverse to the direction of the longitudinal folds described with regard to Figures 1-9. The approximate direction of folding is shown by arrow "N." It should be appreciated that the preferred embodiment described herein may be deviated from without departing from the scope of the present invention. In particular, the number and relative dimensions of the folds might be varied. Moreover, it should be appreciated that although Figure 10 illustrates distal and proximal portions 11 and 13 as having substantially identical dimensions, the respective portions may vary in size significantly without departing from the scope of the present invention.

Figure 11 illustrates the step of folding distal portion 11 over proximal portion 13. Figure 11 further illustrates a fold line 51, along which distal portion 11 is preferably folded a second time, the direction of folding shown approximately by arrow P, yielding the configuration shown in Figure 12. The folded airbag body pictured in Figure 12 is folded again by folding the end of distal portion 11 at a fold line 52, the direction of folding approximately shown by arrow Q, yielding the folded body shown in Figure 13. At this point, distal portion 11 has been folded into a relatively compact folded body 11 having a plurality of folded sections oriented substantially parallel to one another. Subsequently, distal portion 11 is rolled/folded as a unit in a distal direction, the direction of rolling/folding shown in Figure 13 approximately by arrow R, yielding a configuration similar to that shown in Figure 14. Proximal portion 13 is then preferably folded upwardly at a fold line 53. Next, proximal portion 13 is folded a plurality of times to yield a relatively compact folded body having a plurality of substantially parallel fold sections, aligned substantially perpendicular to the folds of distal portion 11. Upon forming the folded distal and proximal portions 11 and 13, respectively, in intimate association as shown in Figure 16, airbag wrap 72 can be folded over the entire airbag 10, and secured to pegs 70, as shown in Figure 17. In a preferred embodiment, proximal portion 13 is larger than the fold body of distal portion 11, however, for clarity the respective fold bodies have been illustrated as having similar dimensions. The folded airbag 10 is then positioned in an airbag housing 80, and ultimately mounted in a motor vehicle, preferably in a conventional manner in the instrument panel. Where the folded airbag is larger than the housing 80, the folded airbag can be squeezed/deformed slightly to allow it to fit therein.

Airbag 10 is preferably activated during or just prior to a crash or sudden vehicle deceleration. In a preferred embodiment, the associated vehicle is equipped with a crash sensor (not shown), which sends an electrical activation signal to a gas generator/inflator (also not shown) for supplying inflation gas to airbag 10. The signal preferably induces the rapid production/release of inflation gas in a manner well known in the art. The gas is preferably directed into airbag 10, causing rapid inflation thereof. Airbag 10 bursts through or displaces the various airbag covers, trim panels, etc. used in housing the airbag system, in a manner also well known in the art. In a preferred embodiment, airbag 10 is positioned in the instrument panel such that proximal portion 13 is oriented substantially toward the vehicle windshield. Referring to Figure 19, there is shown a partial side view of an exemplary vehicle passenger compartment, with airbag 10 mounted therein, within an instrument panel 110. As illustrated, proximal portion 13 is oriented substantially toward the vehicle windshield 112, while distal portion 11 is oriented substantially toward the passenger compartment of the vehicle 114. Referring now to Figure 20, there is shown airbag 10 shortly after an activation signal is sent to the vehicle airbag system. During an inflation event, proximal portion 13 initially fills with inflation gas more quickly than distal portion 11. It is believed that this is due at least in part to the tucking of the end region of airbag 10, as illustrated in Figures 1 and 2. Because of the tucking step, frictional interaction between the layers of the tucked region imparts resistance to the force of inflating gas in the distal portion 11 that is less than frictional interaction between the layers of the un-tucked, proximal portion. Consequently, distal portion 11 expands more slowly than proximal portion 13. As illustrated in Figure 20, proximal portion 13 inflates and expands upwardly relative to the instrument panel 110, preferably contacting the windshield 112. At least a portion of the partially inflated "bubble" of proximal portion 13 is thereby positioned to contact/cushion part of the body (typically the head or chest) of a vehicle occupant positioned proximate the instrument panel. Preferably, the bubble 13 will be positioned to cushion the head of an occupant during a crash. The point and locations at which an occupant actually contacts the inflating airbag will depend on many factors, including the characteristics of the crash, the position of the occupant prior to the crash, and whether or not the occupant is wearing a seat belt. After initial partial inflation of proximal portion/bubble 13, further inflation of distal portion 11 begins. It should be appreciated that distal portion 11 begins to inflate at substantially the same time that proximal portion 13 begins to inflate, however, as described, inflation of proximal' portion 13 takes place more quickly than inflation of distal portion 11. Thus, shortly after airbag 10 is inflated to the state shown in Figure 20, distal portion 11 preferably begins to expand into the vehicle occupant compartment 114. As distal portion 11 inflates, the tucked region is untucked/unfolded, and distal portion 11 is expanded outwardly and downwardly, substantially following the contour of the instrument panel. In a preferred embodiment, distal portion 11 is substantially "wedged" between a vehicle occupant (not shown) and the instrument panel 110. The initial inflation of proximal portion 13 contributes to the downward projection of distal portion 11, and assists in unfolding the longitudinal folds or pleats, formed during the steps pictured in Figures 1-9, giving distal portion 11 a greater tendency to expand outwardly early in its deployment. Specifically, when proximal portion 13 inflates upwardly toward the windshield, the bubble 13 has a tendency to force the still partially folded distal portion 11 outward and downward, assisting in positioning portion 11 such that its inflation trajectory will lie substantially between the instrument panel and vehicle occupant. Referring to Figure 21, there is illustrated airbag 10 in a substantially fully inflated state.

The distal portion of the airbag can be tucked to varying degrees for example, where it is desirable to deploy the airbag such that a greater proportion'of the airbag wedges between the occupant and instrument panel, or does so earlier in deployment, the airbag can be folded with a relatively shallow tuck. Conversely, where it is desirable to deploy the airbag such that a lesser proportion of the airbag wedges between the occupant and the instrument panel, or does so later in deployment, the airbag can be folded having a relatively deep tucked region. Because the folded airbag wedges between the instrument panel and the occupant, the deployment kinematics are significantly improved over earlier designs. For instance, rather than projecting an end of the airbag rapidly toward a vehicle occupant, in some instances producing a risk of injury, the airbag is deployed substantially between the occupant and the instrument panel, and spreads the force of the inflation over a larger area of the body of the occupant. Such a design also reduces the likelihood, in certain situations, that the airbag will descend forcefully on the head of the occupant, a situation that may occur where an occupant is out of a normal riding position.

Various quantitative measures of performance are shown in Graphs 1 and 2, below. Graph 1 illustrates performance data collected in airbag deployment tests utilizing a dummy 3-year-old in a position known as NHTSA-1, generally a position with the head of the dummy proximate the instrument panel prior to airbag deployment. Performance data in other tests (not shown), for example, with a 6-year-old dummy, also fell well within applicable standards. Graph 2 illustrates performance data collected in airbag deployment tests utilizing a dummy 3-year-old in a position known as NHTSA-2, generally a position wherein the chest of the dummy is positioned proximate the instrument panel prior to airbag deployment. The vertical axis of Graphs 1 and 2 represents the Federal Motor Vehicle Safety Standards-208 (FMVS208 Final Rule (December 2001)) with 100% representing the maximum allowable measure for various performance criteria. The horizontal axis sets forth the various parameters tested, and the bars corresponding to those parameters represent the percent of maximum levels allowed/recommended by the National Highway Transportation Administration. In Graphs 1 and 2, the variables tested were as follows:

| | |
|---|---|
| HIC | -Head Injury Criteria |
| Chest G | -Chest Acceleration (G's) |
| Chest Def | -Chest Deflection |
| Neck comp | -Neck Compression |
| Neck tension | |
| Nte | -Neck Tension Extension |
| Nce | -Neck Compression Extension |
| Ntf | -Neck tension flexion |
| Ncf | -Neck compression flexion |

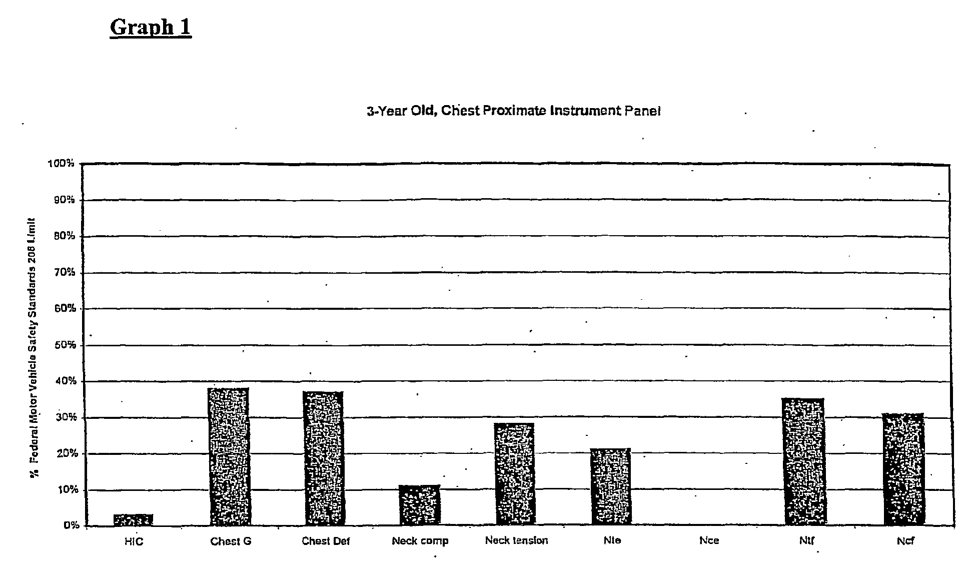

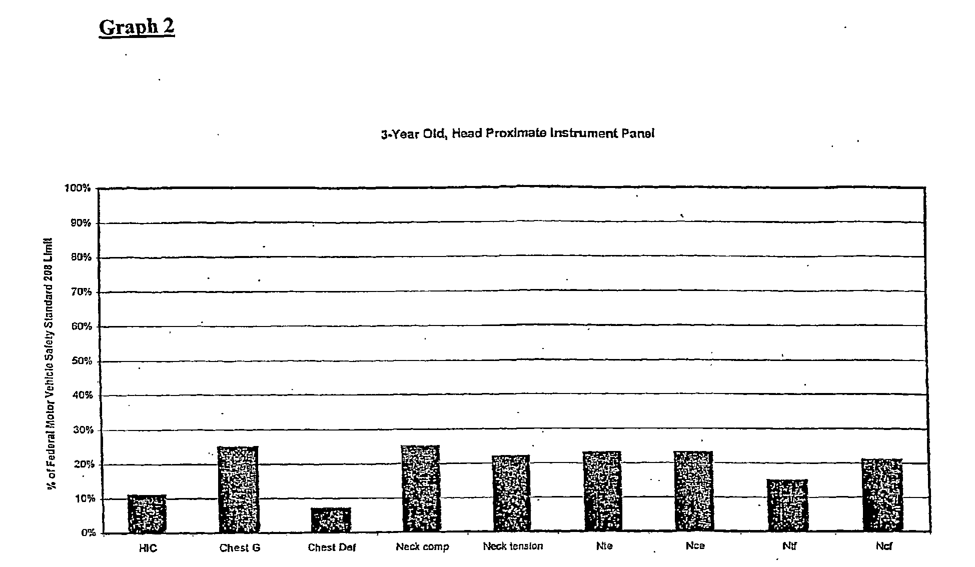

In summary, the presently disclosed folding method provides deployment of an airbag that, as tested, has performance characteristics well within the Federal standards. The various performance and kinematics criteria, and methods for testing the airbag deployment, as well as performing the calculations necessary in determining values of the above-referenced variables, are all well known in the vehicle safety arts.

The present description is only for illustrative purposes; the description and illustrations herein should not be construed to narrow the scope of the present invention in any way. Thus, those skilled in the art will appreciate that various alterations could be made to the presently disclosed embodiments without departing from the scope of the present invention as defined in the apended claims. For instance, embodiments are contemplated in which tethers are utilized to assist in optimizing the deployment trajectory of the inflating airbag. One such embodiment (not shown), preferred in designs wherein the airbag is mounted on top of the instrument panel, utilizes a tether fastened to the inside of the airbag, preventing an end or top region of the airbag from being projected farther into the passenger compartment than desired. The tethers may be attached at varying points in the airbag, and optimal designs depend on the specific vehicle dimensions. Such tethers have also been shown to be useful in volume control of the airbag. When the airbag is maximally expanded under the restraint of the tether(s), excess inflation gas can be discharged through vents in the airbag. By limiting expansion of the proximal portion of the airbag, the tether forces more inflation gas to enter and inflate the distal portion of the airbag. Other aspects, features, and advantages will be apparent upon an examination of the drawing figures and appended claims.

## Claims

1. A method of folding an airbag (10) comprising:
tucking a part of a distal portion (11) of an unfolded airbag (10) into an interior of the airbag (10) such that the distal portion (11) is invaginated in the interior of the airbag (10) forming a plurality of overlapping longitudinal folds in first and second halves of the airbag (10);
folding a proximal portion (13) of the airbag (10) a plurality of times along fold lines substantially transverse to an orientation of the longitudinal folds, thereby forming a first fold body;
folding the distal portion (11) of the airbag (10) a plurality of times along fold lines substantially transverse to an orientation of the longitudinal folds, thereby forming a second fold body.

2. The method of claim 1 wherein the tucking step comprises tucking a part of the airbag (10) that is between about ¼ and about ½ of the length of the airbag (10).

3. The method of claim 2 wherein the tucking step comprises tucking a part of the airbag (10) that is about 1/3 of the length of the airbag (10).

4. The method of claim 1 wherein:
the step of folding the proximal portion (13) of the airbag (10) comprises forming the first fold body such that it includes a plurality of substantially parallel fold sections; and wherein
the step of folding the distal portion (11) of the airbag (10) comprises forming the second fold body such that it includes a plurality of substantially parallel fold sections, the fold sections being oriented substantially perpendicular to the fold sections of the proximal portion (13).

5. An airbag module assembly comprising an airbag folded according to the method of claim 1.

6. The method of claim 1 wherein the step of forming a plurality of overlapping longitudinal folds in first and second halves of the airbag comprises:
forming a first set of substantially opposed longitudinal folds in upper and lower regions of the airbag (10), and bringing a first portion of the upper region inwardly across the centerline, a fold line therefrom in the upper region defining a first right inner fold edge, and a fold line therefrom in the lower region defining a right outer fold edge; and
forming a second set of substantially opposed longitudinal folds in the upper and lower regions and folding a second portion of the upper region inwardly across the centerline, a fold line therefrom in the upper region defining a first left inner fold edge, and a fold line therefrom in the lower region defining a left outer fold edge.

7. The method of claim 6 wherein the step of forming a plurality of overlapping longitudinal folds in first and second halves of the airbag (10) further comprises:
bringing the right outer fold edge inwardly toward the centerline;
bringing the first right inner fold edge outwardly to overlap the right outer fold edge, thereby folding the airbag (10) along a longitudinal fold line defining a second right inner fold edge;
bringing the second right inner fold edge outwardly to overlap the first right inner fold edge and the right outer fold edge;
bringing the left outer fold edge inwardly toward the centerline;
bringing the first left inner fold edge outwardly to overlap the left outer fold edge, thereby folding the airbag (10) along a fold line defining a second left inner fold edge;
bringing the second left inner fold edge outwardly to overlap the first left inner fold edge and the left outer fold edge.

8. The method of claim 1 wherein the tucked region defines upper and lower regions of the airbag (10), the method comprising:
inwardly folding a first portion of the airbag (10), a folded edge of the first portion originating in the upper region substantially medial to a longitudinal centerline and a periphery of the airbag (10);
inwardly folding a second portion of the airbag (10);
outwardly folding the first portion of the airbag (10) to overlap the second portion;
inwardly folding a third portion of the airbag (10), a folded edge of the third portion originating in the upper region substantially medial to the centerline and a periphery of the airbag (10);
inwardly folding a fourth portion of the airbag (10); and
outwardly folding the third portion to overlap the fourth portion.

9. The method of claim 8 further comprising the step of:
making a horizontal line on the airbag (10) a predetermined distance from an edge of the tucked region for aligning of a transverse fold in the distal portion of the airbag (10).

## Patentansprüche

1. Verfahren zum Falten eines Luftsacks (10), welches umfasst:
Einziehen eines Teils eines distalen Abschnitts (11) eines ungefalteten Luftsacks (10) in einen Innenraum des Luftsacks (10), so dass der distale Abschnitt (11) in dem Innenraum des Luftsacks (10) eingeschlossen wird, wobei er in ersten und zweiten Hälften des Luftsacks (10) mehrere überlappende Längsfalten bildet;
Falten eines proximalen Abschnitts (13) des Luftsacks (10) mehrere Male entlang von Faltungslinien, die im Wesentlichen quer zu einer Ausrichtung der Längsfalten sind, wodurch ein erster Faltenkörper gebildet wird;
Falten des distalen Abschnitts (11) des Luftsacks (10) mehrere Male entlang Faltungslinien, die im Wesentlichen quer zu einer Ausrichtung der Längsfalten sind, wodurch ein zweiter Faltenkörper gebildet wird.

2. Verfahren nach Anspruch 1, **dadurch gekennzeichnet, dass** der Schritt des Einziehens das Einziehen eines Teils des Luftsacks (10), der zwischen etwa ¼ und etwa der ½ der Länge des Luftsacks (10) ausmacht, umfasst.

3. Verfahren nach Anspruch 2, **dadurch gekennzeichnet, dass** der Schritt des Einziehens das Einziehen eines Teils des Luftsacks (10), der etwa 1/3 der Länge des Luftsacks (10) ausmacht, umfasst.

4. Verfahren nach Anspruch 1, **dadurch gekennzeichnet, dass**:
der Schritt des Faltens des proximalen Abschnitts (13) des Luftsacks (10) das Bilden des ersten Faltenkörpers, so dass er mehrere im Wesentlichen parallele Faltenabschnitte aufweist, umfasst; und dass
der Schritt des Faltens des distalen Abschnitts (11) des Luftsacks (10) das Bilden des zweiten Faltenkörpers, so dass er mehrere im Wesentlichen parallele Faltenabschnitte aufweist, umfasst, wobei die Faltenabschnitte im Wesentlichen senkrecht zu den Faltenabschnitten des proximalen Abschnitts (13) ausgerichtet sind.

5. Luftsackmodulbaugruppe mit einem nach dem Verfahren von Anspruch 1 gefalteten Luftsack.

6. Verfahren nach Anspruch 1, **dadurch gekennzeichnet, dass** der Schritt des Bildens mehrerer überlappender Längsfalten in ersten und zweiten Hälften des Luftsacks umfasst:
Bilden einer ersten Gruppe von im Wesentlichen gegenüberliegenden Längsfalten in oberen und unteren Bereichen des Luftsacks (10) und Bringen eines ersten Teils des oberen Bereichs nach innen über die Mittellinie, wobei eine Faltungslinie davon in dem oberen Bereich eine erste rechte Innenfaltenkante bildet und eine Faltungslinie davon in dem unteren Bereich eine rechte Außenfaltenkante bildet; und
Bilden einer zweiten Gruppe von im Wesentlichen gegenüberliegenden Längsfalten in den oberen und unteren Bereichen und Falten eines zweiten Teils des oberen Bereichs nach innen über die Mittellinie, wobei eine Faltungslinie davon in dem oberen Bereich eine erste linke Innenfaltenkante bildet und eine Faltungslinie davon in dem unteren Bereich eine linke Außenfaltenkante bildet.

7. Verfahren nach Anspruch 6, **dadurch gekennzeichnet, dass** der Schritt des Bildens mehrerer überlappender Längsfalten in ersten und zweiten Hälften des Luftsacks (10) weiterhin umfasst:
Bringen der rechten Außenfaltenkante nach innen hin zur Mittellinie;
Bringen der ersten rechten Innenfaltenkante nach außen, um die rechte Außenfaltenkante zu überlappen, wodurch der Luftsack (10) entlang einer eine zweite rechte Innenfaltenkante bildenden Längsfaltenlinie gefaltet wird;
Bringen der zweiten rechten Innenfaltenkante nach außen, um die erste rechte Innenfaltenkante und die rechte Außenfaltenkante zu überlappen;
Bringen der linken Außenfaltenkante nach innen hin zu der Mittellinie;
Bringen der ersten linken Innenfaltenkante nach außen, um die linke Außenfaltenkante zu überlappen, wodurch der Luftsack (10) entlang einer eine zweite linke Innenfaltenkante bildenden Faltungslinie gefaltet wird;
Bringen der zweiten linken Innenfaltenkante nach außen, um die erste linke Innenfaltenkante und die linke Außenfaltenkante zu überlappen.

8. Verfahren nach Anspruch 1, **dadurch gekennzeichnet, dass** der eingezogene Bereich obere und untere Bereiche des Luftsacks (10) ausbildet, wobei das Verfahren umfasst:
nach innen Falten eines ersten Teils des Luftsacks (10), wobei eine gefaltete Kante des ersten Teils aus dem oberen Bereich im Wesentlichen medial zu einer Längsmittellinie und einem Umfang des Luftsacks (10) herstammt;
nach innen Falten eines zweiten Teils des Luftsacks (10);
nach außen Falten des ersten Teils des Luftsacks (10), um den zweiten Teil zu überlappen;
nach innen Falten eines dritten Teils des Luftsacks (10), wobei eine gefaltete Kante des dritten Teils aus dem oberen Bereich im Wesentlichen medial zu der Mittellinie und einem Umfang des Luftsacks (10) herstammt;
nach innen Falten eines vierten Teils des Luftsacks (10); und
nach außen Falten des dritten Teils, um den vierten Teil zu überlappen.

9. Verfahren nach Anspruch 8, welches weiterhin folgenden Schritt umfasst:
Herstellen einer horizontalen Linie an dem Luftsack (10) bei einem vorbestimmten Abstand von einer Kante des eingezogenen Bereichs zum Ausrichten einer Querfalte in dem distalen Abschnitt des Luftsacks (10).

## Revendications

1. Procédé de pliage d'un airbag (10) comprenant :
le glissement d'une partie d'une portion distale (11) d'un airbag non plié (10) à l'intérieur de l'airbag (10) de telle sorte que la portion distale (11) est invaginée à l'intérieur de l'airbag (10) en formant une pluralité de plis longitudinaux se chevauchant dans de première et seconde moitiés de l'airbag (10) ;
le pliage d'une portion proximale (13) de l'airbag (10) une pluralité de fois le long de lignes de pli sensiblement transversalement à une orientation des plis longitudinaux, formant de ce fait un premier corps à plis ;
le pliage de la portion distale (11) de l'airbag (10) une pluralité de fois le long de lignes de pli sensiblement transversalement à une orientation des plis longitudinaux, formant de ce fait un second corps à plis.

2. Procédé selon la revendication 1, dans lequel l'étape de glissement comprend le glissement d'une partie de l'airbag (10) qui est comprise entre environ 1/4 et environ 1/2 de la longueur de l'airbag (10).

3. Procédé selon la revendication 2, dans lequel l'étape de glissement comprend le glissement d'une partie de l'airbag (10) qui mesure environ 1/3 de la longueur de l'airbag (10).

4. Procédé selon la revendication 1, dans lequel :
l'étape de pliage de la portion proximale (13) de l'airbag (10) comprend la formation du premier corps à plis de telle sorte qu'il comporte une pluralité de sections de pli sensiblement parallèles ; et dans lequel
l'étape de pliage de la portion distale (11) de l'airbag (10) comprend la formation du second corps à plis de telle sorte qu'il comporte une pluralité de sections de pli sensiblement parallèles, les sections de plis étant orientées sensiblement perpendiculairement aux sections de pli de la portion proximale (13).

5. Ensemble de module d'airbag comprenant un airbag plié selon le procédé de la revendication 1.

6. Procédé selon la revendication 1, dans lequel l'étape de formation d'une pluralité de plis longitudinaux se chevauchant dans les première et seconde moitiés de l'airbag comprend :
la formation d'un premier groupe de plis longitudinaux sensiblement opposés dans les zones supérieure et inférieure de l'airbag (10), et l'action d'amener une première portion de la zone supérieure vers l'intérieur en travers de la ligne médiane, une ligne de pli partant de celle-ci dans la zone supérieure définissant un premier bord de pli interne droit, et une ligne de pli partant de celle-ci dans la zone inférieure définissant un bord de pli externe droit ; et
la formation d'un second groupe de plis longitudinaux sensiblement opposés dans les zones supérieure et inférieure et le pliage d'une deuxième portion de la zone supérieure vers l'intérieur en travers de la ligne médiane, une première ligne partant de celle-ci dans la zone supérieure définissant un premier bord de pli interne gauche, et une ligne de pli partant de celle-ci dans la zone inférieure définissant un bord de pli externe gauche.

7. Procédé selon la revendication 6, dans lequel l'étape de formation d'une pluralité de plis longitudinaux se chevauchant dans les première et seconde moitiés de l'airbag (10) comprend en outre :
l'action d'amener le bord de pli externe droit vers l'intérieur en direction de la ligne médiane ;
l'action d'amener le premier bord de pli interne droit vers l'extérieur pour qu'il chevauche le bord de pli externe droit, pliant de ce fait l'airbag (10) le long d'une ligne de pli longitudinale définissant un second bord de pli interne droit ;
l'action d'amener le second bord de pli interne droit vers l'extérieur pour qu'il chevauche le premier bord de pli interne droit et le bord de pli externe droit ;
l'action d'amener le bord de pli externe droit vers l'intérieur en direction de la ligne médiane ;
l'action d'amener le bord de pli interne gauche vers l'extérieur pour qu'il chevauche le bord de pli externe gauche, pliant de ce fait l'airbag (10) le long d'une ligne de pli définissant un second bord de pli interne gauche ;
l'action d'amener le second bord de pli interne gauche vers l'extérieur pour qu'il chevauche le premier bord de pli interne gauche et le bord de pli externe gauche.

8. Procédé selon la revendication 1, dans lequel la zone glissée définit des zones supérieure et inférieure de l'airbag (10), le procédé comprenant :
le pliage vers l'intérieur d'une première portion de l'airbag (10), un bord plié de la première portion prenant naissance dans la zone supérieure sensiblement médiane à une ligne médiane longitudinale et à une périphérie de l'airbag (10) ;
le pliage vers l'intérieur d'une deuxième portion de l'airbag (10) ;
le pliage vers l'extérieur de la première portion de l'airbag (10) pour qu'elle chevauche la deuxième portion ;
le pliage vers l'intérieur d'une troisième portion de l'airbag (10), un bord plié de la troisième portion prenant naissance dans la zone supérieure sensiblement médiane à la ligne médiane et à une périphérie de l'airbag (10) ;
le pliage vers l'intérieur d'une quatrième portion de l'airbag (10) ; et
le pliage vers l'extérieur de la troisième portion pour qu'elle chevauche la quatrième portion.

9. Procédé selon la revendication 8, comprenant en outre l'étape consistant à :
former une ligne horizontale sur l'airbag (10) à une distance prédéterminée depuis un bord de la zone glissée pour aligner un pli transversal dans la portion distale de l'airbag (10).
